Europäisches Patentamt

(19) European Patent Office

Office européen des brevets

(11) Numéro de publication : **0 407 436 B1**

(12) # FASCICULE DE BREVET EUROPEEN

(45) Date de publication du fascicule du brevet :
**04.12.91 Bulletin 91/49**

(51) Int. Cl.$^5$ : **B60K 17/00, B60K 41/00,**
**F04B 49/00**

(21) Numéro de dépôt : **89904086.9**

(22) Date de dépôt : **24.03.89**

(86) Numéro de dépôt international :
**PCT/FR89/00141**

(87) Numéro de publication internationale :
**WO 89/09144 05.10.89 Gazette 89/24**

(54) **GROUPE MOTOPROPULSEUR, NOTAMMENT POUR VEHICULE AUTOMOBILE ET VEHICULE COMPORTANT UN TEL GROUPE.**

(30) Priorité : **25.03.88 FR 8803946**

(43) Date de publication de la demande :
**16.01.91 Bulletin 91/03**

(45) Mention de la délivrance du brevet :
**04.12.91 Bulletin 91/49**

(84) Etats contractants désignés :
**AT BE CH DE FR GB IT LI LU NL SE**

(56) Documents cités :
**EP-A- 0 044 252**
**EP-A- 0 086 725**
**WO-A-82/00615**
**FR-A- 2 210 722**
**US-A- 3 524 387**
**US-A- 4 227 587**

(73) Titulaire : **MOIROUX, Auguste**
**28, avenue Guy-de-Collongue**
**F-69131 Ecully (FR)**
**Titulaire : BERNARD, Francois**
**105, cours du Docteur Long**
**F-69003 Lyon (FR)**
**Titulaire : CHAVY, Pierre**
**10, rue Mesnil**
**F-75116 Paris (FR)**

(72) Inventeur : **MOIROUX, Auguste**
**28, avenue Guy-de-Collongue**
**F-69131 Ecully (FR)**
**Inventeur : BERNARD, Francois**
**105, cours du Docteur Long**
**F-69003 Lyon (FR)**
**Inventeur : CHAVY, Pierre**
**10, rue Mesnil**
**F-75116 Paris (FR)**

(74) Mandataire : **Foldes, Georges et al**
**CABINET BONNET THIRION 95 Bd**
**Beaumarchais**
**F-75003 Paris (FR)**

EP 0 407 436 B1

## Description

L'invention se rapporte à un groupe motopropulseur notamment pour véhicule automobile et concerne plus particulièrement un tel groupe équipé d'un dispositif de transmission hydrostatique.

Un dispositif de transmission hydrostatique classique comporte généralement au moins une pompe refoulant un liquide, le plus souvent de l'huile dans un moteur hydraulique volumétrique. Le piston de la pompe peut être actionné par un moteur thermique, généralement un moteur à combustion interne. Le document EP-A-0 044 252 décrit un tel agencement. Dans un tel système, des moyens de régulation sont prévus pour adapter le débit de l'un des deux sous-ensembles lorsque celui de l'autre varie. Ceci se fait en changeant sa capacité volumétrique, généralement par variation de la course utile.

L'invention concerne essentiellement un groupe motopropulseur associant un moteur à combustion interne, et un dispositif de transmission hydrostatique particulier.

Dans cet esprit, l'invention concerne donc un groupe motopropulseur, notamment pour véhicule automobile, comprenant un moteur à combustion interne, mécaniquement couplé à un dispositif de transmission hydrostatique, comprenant au moins une pompe à piston entraînée par ledit moteur à combustion interne et un moteur volumétrique connecté pour être alimenté par ladite pompe, caractérisé en ce que ladite chambre de compression de la pompe dans laquelle évolue ledit piston renferme ou est en communication permanente avec un accumulateur élastique, et en ce que ce dernier comporte ou est associé à des moyens de réglage de son élasticité.

Cet accumulateur élastique peut très avantageusement être agencé dans le prolongement de l'alésage du piston de la pompe, c'est-à-dire dans le corps de pompe lui-même.

Plusieurs variantes, structurellement différentes, sont possibles pour réaliser ledit accumulateur élastique. Notamment, cet accumulateur peut mettre en oeuvre l'élasticité d'un gaz emprisonné dans une enceinte à volume variable. Il peut aussi comporter un bloc de matériau élastomère. On peut aussi utiliser "l'élasticité" d'un équipage mobile soumis à un champ magnétique tendant à le stabiliser dans une position donnée et exploiter ainsi une certaine force de rappel élastique engendrée magnétiquement sur ledit équipage mobile chaque fois que celui-ci est écarté de sa position stable. Enfin, pour des applications simples, on peut aussi envisager d'utiliser un simple agencement à ressort mécanique prenant appui sur une paroi mobile de la chambre de compression de la pompe. Pour la majorité des modes de réalisation, l'invention prévoit la possibilité de modifier aussi la raideur de l'accumulateur élastique. Plus précisément, pour une machine donnée, les plages de variation de la raideur et du tarage élastique seront prédéterminés par des caractéristiques structurelles.

De nombreux avantages résultent notamment de la combinaison d'un tel dispositif de transmission hydrostatique avec un moteur à deux temps et à piston(s) à course libre.

Enfin, l'invention concerne aussi un véhicule automobile incorporant ce type de groupe motopropulseur.

L'invention sera mieux comprise, et d'autres avantages de celle-ci apparaîtront plus clairement à la lumière de la description qui va suivre, portant sur plusieurs modes de réalisation possibles d'un dispositif de transmission hydrostatique, d'un groupe motopropulseur et d'un véhicule automobile, donnée uniquement à titre d'exemple, et faite en référence aux dessins annexés dans lesquels:

– la figure 1 représente schématiquement un dispositif de transmission hydrostatique à réaction élastique pneumatique;

– la figure 2 est une représentation schématique analogue à la figure 1 d'un autre mode de réalisation de dispositif de transmission hydrostatique à réaction pneumatique;

– la figure 3 est une représentation schématique analogue à la figure 1, d'un autre mode de réalisation de dispositif de transmission hydrostatique à réaction pneumatique;

– la figure 4 est une représentation schématique d'un autre mode de réalisation utilisant une réaction élastique par bloc élastomère;

– la figure 5 est une représentation schématique d'un autre mode de réalisation utilisant une réaction élastique de type magnétique;

– la figure 6 est une vue schématique générale d'un groupe motopropulseur conforme à l'invention et comportant notamment un dispositif de transmission hydrostatique du genre représenté à la figure 1;

– la figure 7 est une représentation schématique transversale du même groupe motopropulseur, vue au niveau de l'embiellage du moteur à combustion interne, suivant la coupe VII-VII de la figure 5;

– la figure 8 est une vue de détail illustrant la forme des lumières de balayage du moteur à combustion interne des figures 6 et 7;

– la figure 9 est une vue schématique de détail montrant un mode de réalisation possible d'une pompe de balayage, délivrant l'air comprimé pour le balayage des cylindres du moteur à deux temps des figures 6 et 7;

– la figure 10 est une vue schématique de détail montrant un mode de réalisation possible d'un démarreur-générateur oscillant;

– la figure 11 est une vue schématique d'un système de régulation permettant de faire varier à la fois l'élasticité de l'accumulateur élastique et la quantité de combustible introduite dans le moteur à combustion interne;

– les figures 12a à 12c sont des schémas montrant plusieurs implantations possibles du groupe motopropulseur conforme à l'invention sur un véhicule automobile;

– la figure 13 décrit une variante à commande pneumatique dudit accumulateur élastique;

– les figures 14a, 14b sont des vues de détail illustrant une variante permettant de supprimer la pompe de balayage des figures 7 et 9; et

– la figure 15 illustre un démarreur hydraulique.

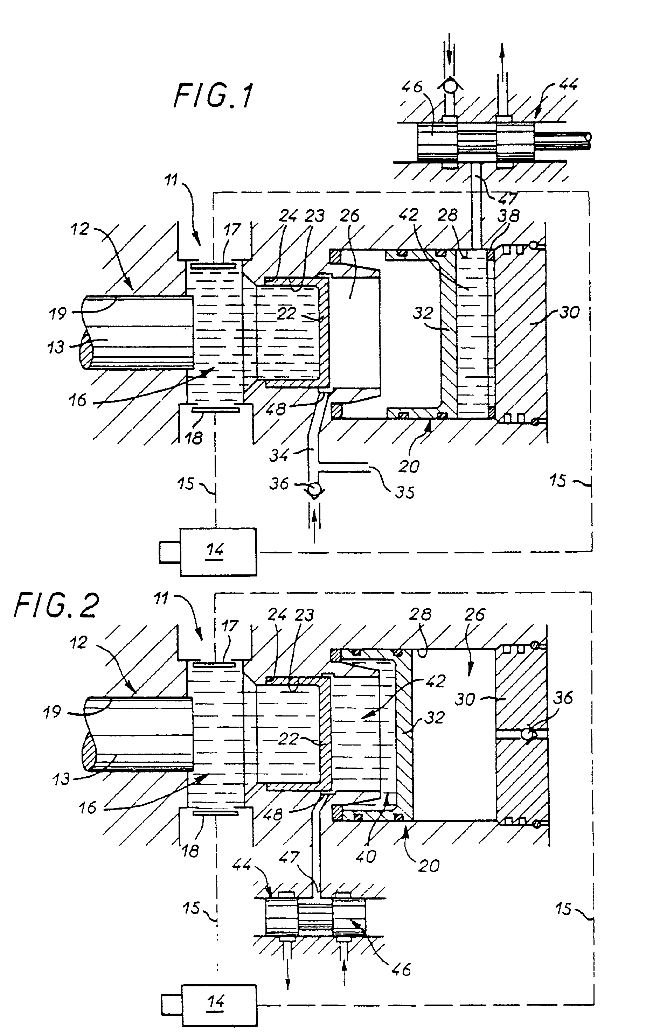

Sur la figure 1, le dispositif de transmission hydrostatique 11 comporte essentiellement une pompe 12 à piston 13 et un moteur volumétrique 14 inséré dans un circuit hydraulique 15 représenté schématiquement en trait interrompu, pour être alimenté par la pompe. Le fluide circulant dans ce circuit est généralement de l'huile. Plus précisément, la pompe comporte une chambre de compression 16 munie d'un clapet d'aspiration 17 et d'un clapet de refoulement 18. Le moteur 14 est connecté en aval du clapet de refoulement 18. Le piston 13, mobile dans un alésage 19 débouchant dans la chambre de compression 16, est entraîné selon un mouvement de va-et-vient alternatif par des moyens non représentés sur la figure 1. Dans la pratique, il s'agit, bien entendu, d'un moteur thermique, et plus particulièrement d'un moteur à combustion interne. Le moteur hydraulique volumétrique 14 est de conception classique mais il est de structure plus simple et plus robuste du fait que, dans le cadre de l'invention, il peut être, et de préférence, est à cylindrée constante.

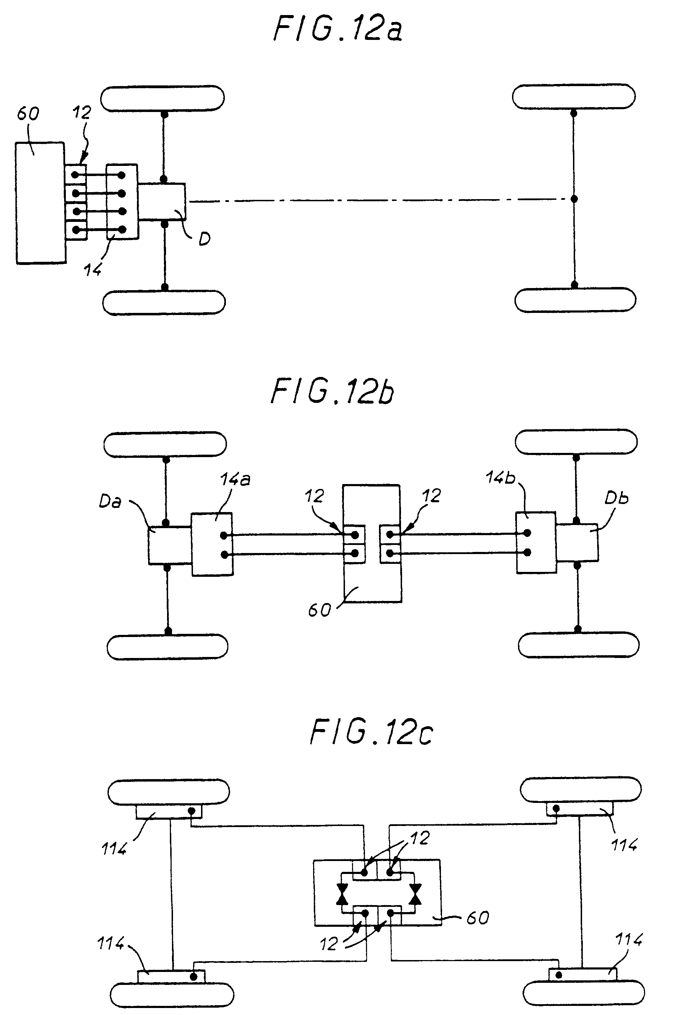

La chambre de compression 16 de la pompe renferme ou est en communication permanente avec un accumulateur élastique 20. Par "communication permanente", on entend que ladite communication ne dépend pas de l'état d'ouverture ou de fermeture d'un quelconque clapet, l'accumulateur élastique réagissant directement sur la pression qui règne dans la chambre de compression 16. Pour ce faire, l'accumulateur élastique 20 est couplé à une première paroi mobile 22 appartenant à la chambre de compression de la pompe, c'est-à-dire formant une paroi de cette chambre. Ici en l'occurrence, il s'agit de la paroi située en regard et dans le prolongement axial du piston 13. Dans le mode de réalisation envisagé, cette paroi 22 est constituée par un piston libre se déplaçant dans un alésage 23 pratiqué dans le corps de pompe, coaxialement à l'alésage 19. Ce piston est sollicité vers un épaulement 24 par ledit accumulateur élastique 20. Ce dernier comporte un chambre 26 remplie d'un gaz et également agencée dans le corps de pompe, coaxialement aux pistons 13 et 22. Cette chambre est définie dans un alésage 28 de plus grand diamètre que celui de l'alésage 23 et elle est limitée axialement, d'une part par le piston 22 et d'autre part, par une seconde paroi mobile 32, en forme de piston libre, monté coulissant dans l'alésage 28. Dans l'alésage 23 est ménagée une gorge 48 seulement découverte quand le piston 22 est en butée contre l'épaulement 24. De cette façon, cette gorge 48 est fermée dès le début d'un déplacement du piston 22, à chaque course et le gaz contenu dans la chambre 26 est ainsi aussitôt isolé. La charge en azote de la chambre 26 peut ainsi être "réactualisée" à chaque cycle qui entraîne un déplacement du piston 22. S'il y a plusieurs pompes en parallèle, la charge de chaque chambre 26 est donc rigoureusement la même. Dans cette gorge débouche un perçage 34 muni d'un clapet anti-retour 36 par lequel la masse de gaz peut être complétée au cours du temps, à partir d'une source extérieure non représentée, pour compenser les fuites. Le perçage 34 est en communication avec le dispositif de commande par le canal 35 (voir plus loin figure 11). Le gaz sous pression dans la chambre sollicite le piston 32 vers un épaulement 38. Par ailleurs, l'accumulateur élastique 20 comporte ou est associé à des moyens de réglage de sa propre élasticité. Dans l'exemple représenté, il s'agit d'une chambre à volume variable, 42, réglable, remplie d'un fluide incompressible, normalement de l'huile. Cette chambre est séparée de l'accumulateur élastique par ladite seconde paroi mobile 32. Plus précisément, cette chambre à volume variable 42 est agencée entre la partie déformable de l'accumulateur élastique, c'est-à-dire la chambre 26 et la paroi fixe d'extrémité 30 constituée par exemple par un bouchon muni de joints d'étanchéité annulaire obturant l'alésage 28. Des moyens de commande 44 sont prévus pour ajuster la quantité de fluide incompressible dans la chambre 42. Dans l'exemple décrit, le fluide est distribué par un tiroir de commande 46 dont la sortie communique par un conduit 47 percé dans la partie haute de l'alésage 28 au voisinage de la position extrême du piston 32 pour laquelle ce piston est en butée contre l'épaulement 38.

Le fonctionnement du dispositif de transmission hydrostatique qui vient d'être décrit est le suivant. Le fluide injecté dans la chambre 42 est le paramètre sur lequel on agit pour ajuster les moyens de réglage d'élasticité de l'accumulateur élastique 20. Il est clair que, plus le volume de la chambre 42 augmente, plus la pression de tarage du gaz emprisonné dans la chambre 26 est élevée. Cette pression de tarage peut se définir comme étant la pression exercée sur le piston 22 par l'accumulateur élastique, c'est-à-dire par la chambre 42 remplie de fluide incompressible.

Tant que la pression en amont du moteur hydraulique 14 est inférieure à ladite pression de tarage, ladite première paroi mobile 22 reste immobile en appui contre l'épaulement 24 et tout le débit de la pompe est refoulé par le clapet 18 pour alimenter le moteur 14. Si les conditions de marche du moteur se modifient et que sa vitesse diminue, alors le débit accepté par le moteur diminue et l'excès de débit refoulé par la pompe doit rester dans la chambre 16. La pression a donc tendance à augmenter. Lorsque cette pression dépasse la pression de tarage, la capacité élastique 20 se comprime, ce qui permet de stocker l'huile en excès. L'énergie correspondant à cette quantité d'huile stockée dans la chambre 16 est ainsi emmagasinée dans la capacité élastique. Cette énergie est restituée au cycle suivant. On conçoit donc que le couple augmente lorsque la vitesse du moteur diminue ce qui constitue une particularité de fonctionnement très intéressante pour de nombreuses applications, notamment la traction automobile. Dans un tel cas, en effet, le couple augmentera automatiquement au moindre ralentissement du véhicule, par exemple si celui-ci aborde une pente. Autrement dit, comme on le verra en détail plus loin, on peut disposer naturellement, de par la conception même du système, d'une loi de couple inversement proportionnelle à la vitesse du moteur hydraulique, pour un "cran" de combustible donné fourni au moteur actionnant le piston de pompe. Pour augmenter la charge, il suffit d'augmenter le tarage de ladite capacité élastique, ce qui empêche le stockage du fluide et le dirige vers le moteur hydraulique. Dans ce cas, le même processus de régulation s'effectue mais à un niveau de pression plus élevé.

Dans des conditions de fonctionnement limites, c'est-à-dire si le moteur 14 est à l'arrêt, le clapet 18 ne s'ouvre pas et tout le volume déplacé par le piston de pompe 13 est absorbé par le déplacement de ladite première paroi mobile ou piston 22. L'énergie est entièrement stockée et, là encore, renvoyée au piston le cycle suivant. Bien entendu, une régulation, dont un exemple sera décrit plus loin en référence à la figure 11, agit sur le moyen de réglage 40 pour "détendre" ladite capacité élastique, de sorte que l'énergie échangée dans ces conditions soit aussi faible que possible, au régime de ralenti. Si le système équipe un véhicule automobile, on conçoit donc que le moteur à combustion interne peut fonctionner à un régime de ralenti sans que le moteur 14 soit en mouvement (véhicule à l'arrêt) la consommation de combustible étant ramenée au minimum du fait que ladite capacité élastique est complètement "détendue".

Dans la variante de la figure 2, les éléments de structure analogues portent les mêmes références numériques et ne seront pas tous décrits à nouveau en détail. Ce mode de réalisation fait encore appel à une capacité élastique à gaz. Il se distingue du précédent par l'emplacement de la chambre à volume variable. En effet, les chambres 26 et 42 sont inversées, la chambre à volume variable étant limitée axialement par les pistons 22 et 32. Autrement dit, ladite chambre à volume variable 42 est agencée entre la partie déformable de l'accumulateur élastique 20 (c'est-à-dire la chambre 26) et la chambre de compression de la pompe. Le même agencement de gorge 48 obturable par le piston 22 est conservé mais cette fois, ladite gorge 48 est reliée aux moyens de commande 44 de sorte que la quantité de fluide incompressible emprisonnée dans la chambre 42, c'est-à-dire la consigne imposée par les moyens de commande 44 peut être "réactualisée" à chaque cycle qui entraîne un déplacement du piston 22. Le clapet anti-retour 36 par lequel la masse de gaz dans la chambre 26 peut être complétée au cours du temps, pour compenser les fuites, est agencé dans la paroi fixe 30.

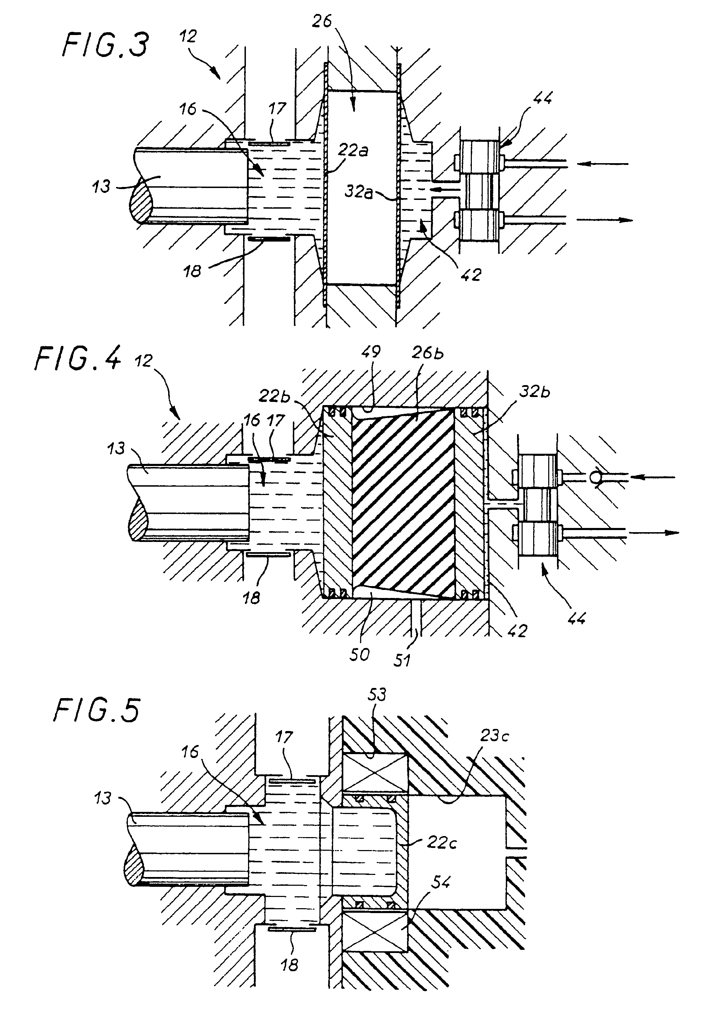

Dans la variante de la figure 3, les éléments de structure analogues portent encore les mêmes références numériques et ne seront pas tous décrits à nouveau en détail. Ce mode de réalisation fait toujours appel à une capacité élastique à gaz. Il se distingue du précédent par la nature des parois mobiles. Sur la figure 3, on n'a représenté que la pompe et son accumulateur élastique. Selon l'exemple, la chambre 26 remplie de gaz est définie à proximité immédiate de la chambre de compression 16 de la pompe. Autrement dit, ladite première paroi mobile 22a est commune aux chambres 16 et 26. En outre, ladite première paroi mobile 22a est une membrane déformable. Dans la pratique, une telle membrane peut être constituée à partir de fils synthétiques tressés et recouverts ou enrobés de matériau élastomère. Ladite seconde paroi mobile 32a séparant la chambre 26 remplie de gaz de la chambre à volume variable 42 est également constituée par une membrane de même nature, agencée parallèlement à ladite première paroi 22a. Par conséquent, dans ce mode de réalisation, la partie déformable de l'accumulateur élastique se trouve également placée entre la chambre de compression 16 de la pompe et la chambre à volume variable 42 remplie de liquide. Les moyens de commande 44 sont semblables à ceux de la figure 1.

Bien entendu, il est parfaitement possible de combiner les deux sortes de parois mobiles décrites jusqu'à présent, ladite première paroi 22 étant par exemple une membrane et ladite seconde paroi 32 étant un piston, ou inversement.

Dans la variante de la figure 4, ledit accumulateur élastique est essentiellement constitué par un bloc de matériau élastomère 26b comportant deux surfaces d'extrémité parallèles, respectivement en contact avec lesdites première et seconde parois mobiles 22b et 32b se présentant ici sous la forme de pistons libres adaptés à se déplacer dans un même alésage 49. Le bloc de matériau élastomère 26b est donc comprimé uniaxialement entre les deux pistons. On trouve actuellement des matériaux élastomères à faible hystérésis convenant à cet usage. L'agencement général des éléments de cette variante est comparable à celui des figures 1 et 3, la partie déformable dudit accumulateur élastique étant localisée entre la chambre de compression 16 de la pompe et ladite chambre à volume variable 42. Le bloc 26b comporte une paroi latérale à profil concave laissant subsister un espace annulaire 50 dans l'alésage pour permettre la libre déformation du bloc élastomère. Un conduit de purge 51 communique avec cet espace annulaire.

Enfin, le mode de réalisation de la figure 5 comporte un accumulateur élastique mettant en oeuvre des forces de rappel d'origine magnétique. Ladite première paroi mobile 22c fermant la chambre de compression est constituée par un piston libre mobile dans un alésage 23c situé dans le prolongement du piston 13 et coaxialement à celui-ci. Le piston libre est en matériau ferromagnétique tandis que l'alésage 23c est pratiqué dans un bloc de matériau isolant, tel que de la résine. Une gorge annulaire 53 est ménagée dans l'alésage 23c et abrite une armature magnétique 54, en l'occurrence une ou un ensemble de bobines. Le champ magnétique engendré est tel qu'il tende à placer le piston 22c dans une position prédéterminée, comme illustré sur la figure 5. Si la pression qui règne dans la chambre de compression 16 de la pompe tend à repousser le piston, une force de rappel d'origine magnétique est créée, tendant à s'opposer à ce déplacement et par conséquent à ramener le piston dans sa position d'équilibre stable. Le courant d'excitation dans l'armature magnétique est modifié pour faire varier le tarage d'élasticité de l'accumulateur élastique ainsi constitué. Dans ce dispositif, les moyens de réglage de l'élasticité sont donc des moyens de réglage de courant dans un ou un ensemble d'électro-aimants.

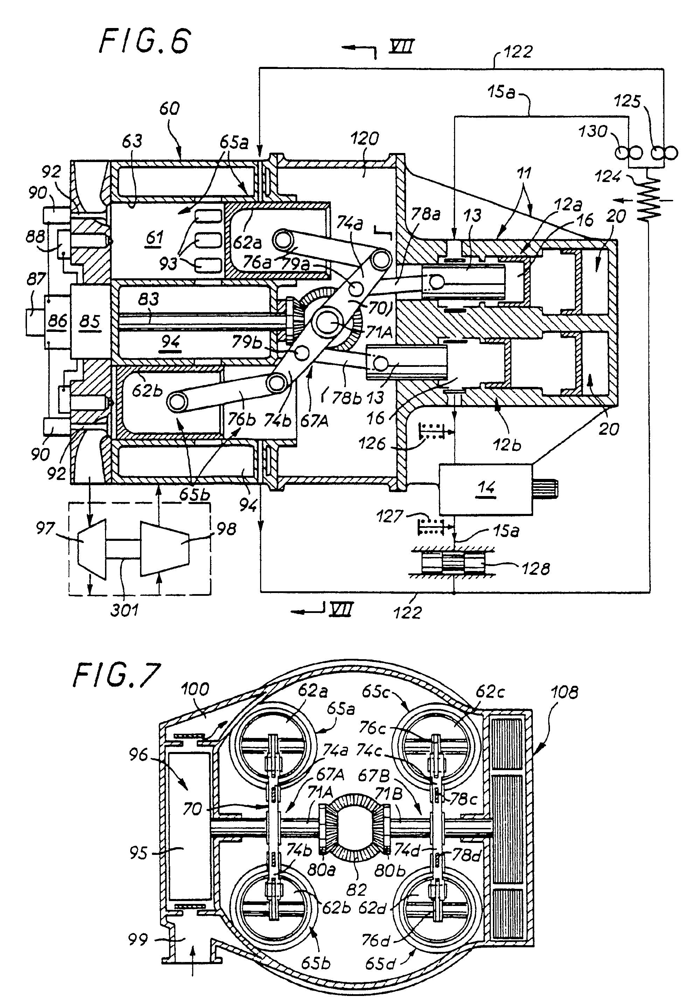

On va maintenant décrire le groupe motopropulseur plus particulièrement schématisé aux figures 6 et 7. Ce groupe se compose d'un moteur à combustion interne 60 comprenant au moins une chambre de combustion 61 dans laquelle évolue un piston 62 et d'au moins un dispositif de transmission hydrostatique 11, du type décrit ci-dessus et dont le piston 13 est mécaniquement couplé au piston 62 du moteur à combustion interne, pour être entraîné par lui. Dans l'exemple, le dispositif de transmission hydrostatique est conforme à celui de la figure 1 et cette partie du groupe ne sera pas à nouveau décrite en détail. Il suffit de rappeler que la ou chaque pompe 12 est insérée dans un circuit hydraulique 15a pour refouler l'huile dans un moteur hydraulique volumétrique 14 et que la chambre de compression 16 dans laquelle évolue le piston de pompe renferme ou est en communication permanente avec un accumulateur élastique 20. Pour des raisons qui apparaîtront plus loin, le groupe motopropulseur comporte quatre pompes 12 et dans cet exemple, le moteur volumétrique 14 est commun à ces quatre pompes.

Le moteur à combustion interne 60 est ici un moteur à deux temps, à balayage. Il s'agit ici d'un moteur Diesel mais une version de moteur à essence est parfaitement envisageable. Ce moteur 60 comporte au moins un ensemble 65 comprenant un cylindre 63 et un piston 62 délimitant la chambre de combustion 61. Le piston est à course libre, c'est-à-dire qu'il n'est couplé à aucun vilebrequin. En fait, le moteur comprend généralement deux tels ensembles 65 cylindre et piston, agencés parallèlement comme représenté à la figure 6 et de préférence quatre ensembles agencés parallèlement les uns aux autres, suivant une configuration en barillet, comme cela apparaît clairement sur la figure 7. Plus précisément, deux tels ensembles 65a, 65b ou 65c, 65d sont accouplés, d'une part à un mécanisme inverseur 67A ou 67B et d'autre part à des pompes respectives 12a, 12b et 12c, 12d. La Paire d'ensemble 65a, 65b est accouplée par ses pistons au mécanisme inverseur 67A tandis que la paire d'ensembles 65c, 65d est accouplée au mécanisme inverseur 67B. Comme on le verra plus loin, les deux paires d'ensembles fonctionnent en opposition de phase, de sorte que l'ensemble soit dynamiquement équilibré.

Pour chaque paire d'ensembles, le mécanisme inverseur 67 précité comprend un levier inverseur 70 monté pivotant en son milieu autour d'un arbre rotatif 71A ou 71B, respectivement. Cet arbre est perpendiculaire aux deux pistons à course libre 62 auxquels il est couplé. Chaque levier 70 comporte ainsi deux branches égales 74a, 74b ou 74c, 74d, respectivement, s'étendant de part et d'autre de son point de pivotement médian, c'est-à-dire de l'axe de pivotement de l'arbre 71 correspondant. Le ou les pistons à course libre 62a-62d sont respectivement reliés, de façon articulée, aux extrémités des branches 74a-74d, Par l'intermédiaire de biellettes 76a-76d, respectivement articulées entre lesdites extrémités desdites branches et les pistons 62. Par ailleurs, le piston 13 de chaque pompe 12a-12d est mécaniquement couplé à une branche correspondante 74a-74d de l'un des leviers inverseurs. Cette liaison articulée se fait par l'intermédiaire de biellettes 78a-78d ou de mécanismes équivalents. Chaque biellette 78a-78d est articulée en un point intermédiaire 79a-79d de la branche de levier correspondante. La distance entre ce point d'articulation et l'axe de pivotement de l'arbre 71A ou 71B est choisie en fonction des plages de vitesses respectives du moteur à combustion interne et de la ou les pompes 12 dudit dispositif de transmission hydrostatique 11.

Comme mentionné précédemment, des moyens d'équilibrage, constituant aussi des moyens de synchronisation desdits ensembles, sont prévus pour maintenir le fonctionnement des deux paires d'ensembles 65a, 65b et 65c, 65d déphasés de 180° et permettre ainsi un équilibrage dynamique du moteur et du dispositif de transmission hydrostatique. Ces moyens de synchronisation sont ici mécaniques. En effet, les arbres de pivotement 71A et 71B, coaxiaux et situés dans le prolongement l'un de l'autre (figure 7) sont liés à un mécanisme de pignons satellites et planétaire, formant l'essentiel desdits moyens de synchronisation. Chaque arbre 71A, 71B solidaire du levier inverseur correspondant est lié à un pignon satellite 80A, 80B, engrenant avec un unique pignon planétaire 82 dont l'axe de rotation coïncide avec l'axe de symétrie de l'agencement en barillet des ensembles cylindre et piston à course libre 65a-65d. Plus précisément, chaque pignon satellite 80A, 80B, est fixé à l'extrémité interne de l'arbre 71A, 71B correspondant, tandis que le pignon planétaire 82 est fixé à l'extrémité d'un arbre 83 monté tournant sur lui-même autour dudit axe de symétrie. Cet arbre s'étend parallèlement aux quatre cylindres et comporte, vers son extrémité opposée, un jeu de cames (non visible sur les dessins) commandant les cycles de fonctionnement des différents cylindres du moteur. Plus précisément, cet arbre à cames 83 entraîne des pompes à injection de carburant 85, des pompes à huile 86 et un régulateur de combustion 87 qui sera décrit plus loin. Les pompes à injection 85 alimentent respectivement des injecteurs 88 dits "à accumulation", dont le principe est connu. Les pompes à huile 86 alimentent des vérins 90 commandant respectivement les soupapes d'échappement 92 du moteur. Ce type de commande hydraulique est connu et permet de faire varier la durée et la phase de l'impulsion hydraulique commandant chaque soupape d'échappement. On peut donc avancer ou retarder l'ouverture ou la fermeture de chacune de ces soupapes, en fonction des besoins. Cette aptitude liée à celle de pouvoir faire varier à volonté les rapports de compression et de détente du moteur à combustion interne (parce que ce moteur a des pistons à course libre) permet d'adapter ce moteur à toutes les exigences de la combustion Diesel.

Dans le cas d'un moteur à essence, le même avantage subsiste, l'injection de combustible qui se fait après fermeture des soupapes d'échappement est réalisée par des injecteurs et pompes classiques, la culasse étant munie en outre d'une bougie d'allumage pour chaque cylindre.

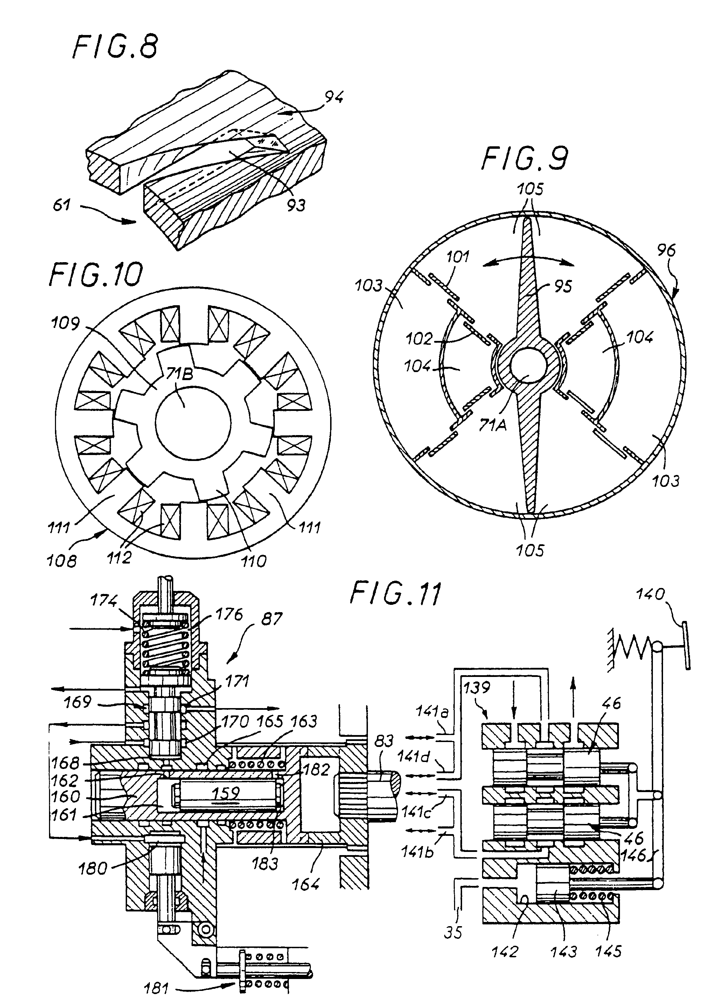

Comme mentionné plus haut, le moteur à combustion interne est de préférence un moteur à deux temps à balayage. Il comporte donc un réservoir d'air de balayage 94, globalement cylindrique, entourant les cylindres 63. Ce réservoir alimente en air comprimé les chambres de combustion des différents cylindres, par des lumières 93 pratiquées dans les différents cylindres. Les lumières d'un cylindre sont découvertes par le piston à chaque phase de balayage. Chaque lumière a la forme illustrée à la figure 8. Au niveau de la chambre de combustion 61, l'orifice de ladite lumière présente deux bords longitudinaux parallèles s'étendant suivant les génératrices de la surface interne du cylindre. Au contraire, au niveau du réservoir de balayage 94, l'orifice de la lumière présente deux bords longitudinaux courbes. Ceux-ci s'étendent sensiblement parallèlement à ceux de l'orifice interne du côté de l'extrémité la plus éloignée des soupapes d'échappement et ils "s'inclinent" progressivement jusqu'à l'extrémité opposée, tout en restant parallèles entre eux. L'"inclinaison" s'étend sur un secteur angulaire total de 30°. Ainsi, au moment de l'échappement où l'air de balayage provenant du réservoir 94 pénètre dans le cylindre, l'injection d'air se fait en partie radialement et en partie avec une composante tangentielle. Ceci a pour résultat d'injecter de l'air frais de balayage à la fois vers le centre et vers la périphérie du cylindre. Il en résulte une meilleure expulsion des gaz brûlés.

L'air est introduit dans le réservoir 94 par une pompe à air de balayage 96, oscillante, et/ou par un système de suralimentation classique comprenant une turbine 97 reliée à un collecteur d'échappement (non représenté) et mécaniquement couplée à un compresseur 98. Dans la version la plus complète, la sortie d'air comprimé du compresseur est reliée à l'entrée 99 de la pompe 96 (figure 7) par l'intermédiaire d'un refroidisseur d'air de type connu, non représenté. La sortie 100 de cette pompe communique avec ledit réservoir d'air de balayage 94.

La pompe 96, qui constitue dans ce cas un second étage de compression est un ensemble à rotor 95 à double palette, ce rotor étant monté à l'extrémité de l'un des arbres (en l'occurrence ici l'arbre 71A) d'un levier inverseur 70. Selon le mode de réalisation de la figure 9, la pompe 96 est divisée en plusieurs compartiments communiquant entre eux par des clapets d'aspiration 101 et des clapets de refoulement 102. L'entrée 99 communique avec deux compartiments d'aspiration 103, symétriques par rapport à l'axe de rotation du rotor et la sortie 100 communique avec deux compartiments de refoulement 104, également symétriques par rapport à cet axe. Ces quatre compartiments s'inscrivent entre des parois radiales qui portent l'ensemble des clapets 101 et 102. Le rotor 95 évolue dans deux chambres de compression 105, symétriques par rapport à l'axe. Le rotor partage ces chambres de compression en quatre capacités volumétriques de volumes variables. Les rotors entraînés par l'arbre 71A décrivent un mouvement oscillant dans les chambres de compression 105. Le fonctionnement de la pompe découle avec évidence de la description qui figure ci-dessus.

La pompe est surtout efficace au démarrage ou au ralenti. Elle est néanmoins suffisante pour un véhicule de petite cylindrée et de performances moyennes. Pour de meilleures performances cependant, et surtout pour les véhicules lourds, on préférera géné-ralement un montage en cascade du compresseur de suralimentation et de la pompe. Dans ce cas, on peut envisager un autre refroidisseur d'air en aval de la pompe. L'alimentation en air de balayage est ainsi mieux assurée à tous les régimes et le démarrage est plus facile.

Le groupe motopropulseur des figures 6 et 7 est aussi équipé d'un démarreur électrique 108 à mouvement alternatif oscillant, représenté à la figure 9. Le rotor de ce dispositif est couplé à l'arbre de l'un des leviers inverseurs précités, en l'occurrence ici l'arbre 71B de sorte que la pompe et le démarreur se trouvent agencés coaxialement et de part et d'autre du bloc moteur. Après le démarrage, le dispositif est commuté pour fonctionner en générateur. Le rotor 109 est fixé à l'extrémité de l'arbre 71B et entraîné par lui. Ce démarreur fonctionne suivant le principe dit "à réluctance variable". Le rotor 109, en tôle feuilletée, comporte six pôles 110 régulièrement répartis circulairement et le stator, également à structure feuilletée comporte huit pôles 111 également régulièrement répartis circulairement, chacun des pôles du stator portant une bobine 112. Bien entendu, le nombre de pôles du rotor et du stator peut être différent. Une version à douze pôles pour le rotor et seize pôles pour le stator a même des performances supérieures (couple plus élevé et pertes magnétiques moindres) toutes choses égales par ailleurs. On peut, selon les cas, alimenter simultanément une paire ou plusieurs paires de pôles.

Comme cela apparaît clairement à la figure 6, le moteur à combustion interne 60 et le système de transmission hydrostatique 11 ainsi, ici, que le moteur hydraulique 14 sont regroupés dans une même unité. Ceci permet notamment de simplifier le circuit de refroidissement des cylindres et de le combiner avec le circuit principal 15a établi entre les pompes 12 et le moteur 14. Ainsi, un circuit de circulation d'huile 122 est établi entre une entrée et une sortie du circuit de refroidissement des cylindres. Il comporte successivement un radiateur de refroidissement 124 et une pompe de circulation 125. Par ailleurs, le circuit principal 15a défini entre les pompes 12 et le moteur 14 comporte (à partir d'un collecteur de sortie des pompes) une soupape de sécurité 126, le moteur 14, une soupape de sécurité 127, un tiroir d'isolement 128, le dispositif de refroidissement 124 et une pompe de gavage 130 (distincte de la pompe 125) refoulant l'huile vers les clapets d'admission des pompes 12. Le débit de refroidissement est donc indépendant du débit du dispositif de transmission hydrostatique. La soupape de sécurité 126 est tarée pour maintenir la pression en-dessous d'une valeur maximum choisie. La soupape de sécurité 127, connectée à la sortie basse pression du moteur hydraulique 14, maintient la pression en-dessous d'une valeur maximum choisie (pour un véhicule automobile) pour l'adhérence des roues au sol, lorsque le tiroir progressif d'isolement 128 se ferme en cas de freinage ou d'arrêt.

L'ensemble mécanique comprenant les leviers inverseurs, le mécanisme de pignons planétaire et satellites et les biellettes rattachées aux pistons du moteur à combustion interne et aux pistons des pompes, est logé dans une chambre de refroidissement 120 située entre le bloc moteur thermique et le bloc renfermant les pompes. Elle est alimentée par de l'huile différente de celle du circuit principal et par une pompe non représentée ici.

La figure 11 décrit un système de régulation du groupe motopulseur, remarquable par sa simplicité. Ce système de régulation est bien adapté à un véhicule automobile. Il se décompose en un sous-ensemble dit "lent" 139 relié à la pédale d'accélérateur 140 et en un sous-ensemble dit "rapide", constitué par le régulateur de combustion 87 mentionné précédemment.

La pédale d'accélérateur 140 est mécaniquement couplée à au moins un tiroir 46 décrit en référence à la figure 1 et qui permet d'ajuster la pression dans les chambres 26 des accumulateurs élastiques. Il existe ici deux tiroirs 46 en parallèle, l'un alimentant les chambres à volume variable 42a et 42d (correspondant aux ensembles 65a, 65b) qui sont synchrones par les conduits 141a et 141d et l'autre les chambres 42b et 42c (correspondant aux ensembles 65c, 65d) qui sont synchrones par les conduits 141b et 141c. Le canal 35 décrit ci-dessus est relié à un alésage 142 dans lequel évolue un piston de correction 143 couplé à la pédale d'accélérateur 140. Ce piston agit contre un ressort calibré 145. Lorsque la pression dans les accumulateurs élastiques 26 a atteint la valeur désirée, cette pression, par le canal 35, commun à tous les accumulateurs élastiques, agit sur le piston de correction 143 et ramène, par le levier 146, le tiroir 46 en position médiane, ce qui annule le débit d'huile de réglage envoyé aux chambres 42. Il n'y a donc pas de perte d'énergie en dehors des variations de charge. En cas de décélération, le fonctionnement est inverse de ce qui est décrit ci-dessus et aboutit à une décharge d'huile de réglage renvoyée vers le tiroir 46.

D'autre part, le régulateur de combustion 87 comporte un piston creux 160 rempli d'huile et dont la cavité interne 161 abrite une masselotte 159. Ce piston 160 est mobile dans un alésage coaxial à l'arbre à cames 83 et situé dans le prolongement de celui-ci. Le piston 160 est sollicité vers l'arbre à came par un ressort 163 prenant appui contre un épaulement dudit piston. L'arbre à came comporte à son extrémité, une came cylindrique 164 couplée par des liaisons de forme (à rampes) au piston 160. Le couplage est tel que le mouvement rotatif oscillant de l'arbre à came communique au piston 160 un mouvement linéaire oscillant représentatif de celui des pistons 62 du moteur à combustion interne. Le piston 160 est donc soumis à des accélérations et décélérations proportionnelles à celles des pistons du moteur. Ces accélérations et décélérations sont donc une mesure de la pression de combustion.

La cavité interne 161 du piston 160 peut être mise en communication, par un orifice latéral 162 avec une gorge d'alimentation en huile 165, lorsque le ressort 163 est détendu. La même cavité 161 peut communiquer par l'orifice 162 avec l'alésage 168 d'un tiroir de commande 169 comportant deux épaulements commandant respectivement l'ouverture ou la fermeture de deux gorges 170 et 171 pratiquées dans l'alésage 168. La gorge 170 située du côté de l'extrémité
du tiroir qui communique avec la cavité 161, distribue
de l'huile sous pression; elle coopère avec l'un des
épaulements du tiroir. La gorge 171, qui coopère avec
l'autre épaulement du tiroir, est reliée à une bâche
hydraulique. Un ressort 174 prend appui contre l'autre
extrémité du tiroir 169. Ce ressort sollicite donc ledit
tiroir dans une direction tendant à découvrir la gorge
170. Le ressort est situé dans une cavité 176 recevant
de l'huile ou de l'air sous pression. la pression de
cette huile ou de cet air est représentative de la pression de suralimentation du moteur à combustion
interne.

La partie médiane de l'alésage 168, entre les
deux épaulements, c'est-à-dire la sortie hydraulique
du tiroir, est reliée à la chambre d'un vérin 180. Le piston de ce vérin est couplé à un mécanisme de
commande 181 des pompes d'injection de combustible. Un orifice 182 assure la vidange complète de la
cavité 183 pour éviter une décharge de la masselotte
159 dans le piston 160. Le fonctionnement est le suivant:

On suppose que le conducteur désire augmenter
la vitesse de son véhicule. Une sollicitation de la
pédale d'accélérateur 140 se traduit donc par un "durcissement" des accumulateurs élastiques 20 associés aux différentes pompes. Par conséquent, le débit
accumulé dans les accumulateurs élastiques est plus
faible et le débit dans le moteur hydraulique augmente. Cependant, les accumulateurs élastiques restituent moins d'énergie et la compression du moteur
a tendance à diminuer au cours des cycles suivants,
puisqu'il s'agit d'un moteur à pistons à courses libres.
Il faut donc réintroduire de l'énergie dans le système
en augmentant la quantité de combustible injectée.
C'est ce que réalise automatiquement le régulateur
87.

En effet, l'accélération de l'arbre à came 83 est
proportionnelle à l'accélération des pistons du moteur
à combustion interne. Par conséquent, le piston 160
se comporte comme les pistons 62 du moteur à
combustion interne, avec les mêmes variations
d'accélération. La masselotte 159, au contraire, de
par son inertie, a tendance à rester immobile à l'intérieur du piston 160. Cette masselotte transmet donc
à l'huile, qui se trouve emprisonnée dans la cavité
161, des variations de pression représentatives de
celles des pistons du moteur à combustion interne.
Ces variations de pression agissent sur la position du
tiroir 169 qui commande le débit des pompes d'injection de combustible. Comme mentionné précédemment, la consigne de pression appliquée au tiroir, par
l'intermédiaire du tarage du ressort 174, tient également compte de la pression de suralimentation.

Les figures 12a, 12b et 12c montrent différentes
possibilités d'implantation d'un groupe motopropulseur conforme à l'invention. Sur la figure 12a, le
groupe motopropulseur est typiquement celui qui
vient d'être décrit, c'est-à-dire comportant un moteur
à combustion interne 60 à quatre cylindres, entraînant
quatre pompes. Ces pompes alimentent un unique
moteur hydraulique 14, lequel entraîne mécaniquement un différentiel D couplé aux roues avant ou
arrière. Les quatre pompes hydrauliques 12 alimentent donc en parallèle le moteur hydraulique 14. On
obtient ainsi un ensemble très compact pour une traction avant ou une traction arrière.

Sur la figure 12b, les quatre pompes sont divisées
en groupes de deux pompes déphasées entre elles
de 180° a et b d'une part, c et d d'autre part. Chaque
groupe de pompes alimente un moteur hydraulique
14a ou 14b. Le moteur 14a est couplé aux roues avant
par l'intermédiaire d'un différentiel Da et le moteur
14b est couplé aux roues arrière par l'intermédiaire
d'un différentiel Db. On obtient ainsi un véhicule à
quatre roues motrices ayant les mêmes caractéristiques sur les deux trains propulsifs. On peut, par
actions différentes sur les accumulateurs élastiques
des pompes avant et des pompes arrière, moduler à
volonté les pressions, donc les couples des roues
avant et des roues arrière. Le moteur peut indifféremment être à l'avant, à l'arrière ou en position centrale
tel qu'il est représenté.

La figure 12c décrit un autre mode de réalisation
dans lequel chaque pompe 12 alimente séparément
un moteur hydraulique 114, d'un type connu, combiné
à chaque roue. L'effet différentiel entre les roues
avant d'une part, et les roues arrière d'autre part, est
obtenu par des communications hydrauliques entre
les pompes avant d'une part et les pompes arrière
d'autre part. Ces communications Ca, Cb sont, soit à
ouverture constante limitée, soit à ouverture proportionnelle commandée par la direction du véhicule.

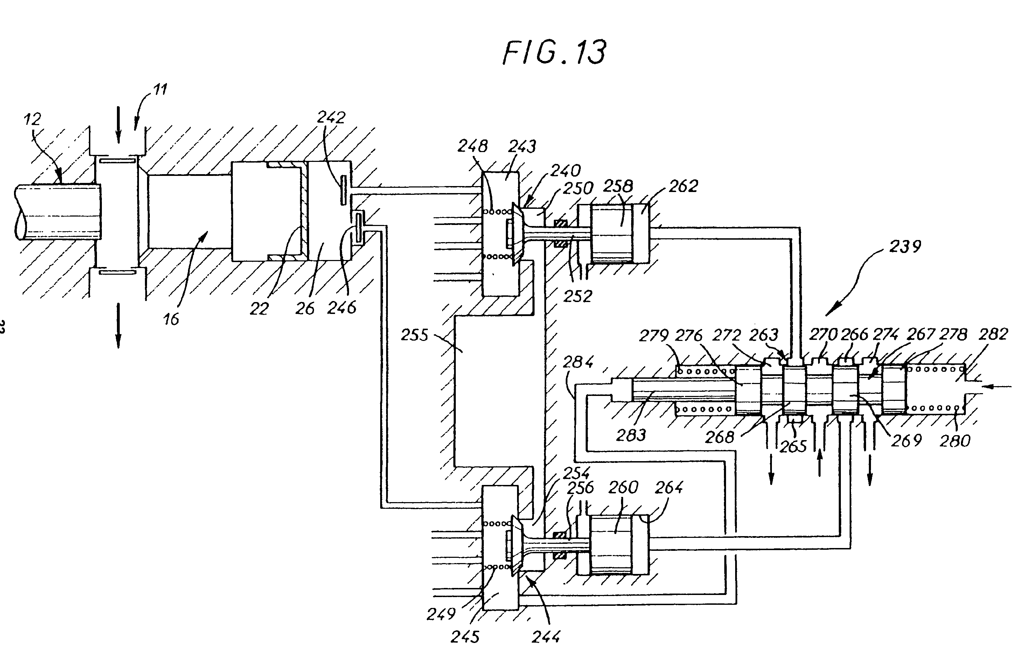

La figure 13 représente une variante dans
laquelle la commande de l'accumulateur élastique est
plus simple et plus rapide. Selon cette variante, la
chambre à volume variable 42 des figures 1 à 3 est
supprimée car on agit directement sur le chargement
du gaz dans la chambre 26 définissant ledit accumulateur.

Sur la figure 13 on n'a représenté qu'une seule
pompe 12 couplée à son accumulateur élastique. La
raideur de ce dernier est contrôlée par un système de
commande hydropneumatique 239 destiné à remplacer le sous-ensemble 139 de la figure 11. Le système
de commande 239 est donc couplé à une pédale
d'accélérateur et pilote plusieurs accumulateurs élastiques, en parallèle, par exemple quatre chambres 26
dans le cas où le moteur est équipé de quatre équipages mobiles (figures 6 et 7) actionnant quatre pompes 12 couplées respectivement aux quatre
chambres 26 formant lesdits accumulateurs élastiques. Chaque chambre 26 est reliée à une soupape
de charge 240 par un clapet non-retour de charge 242 et à une soupape de décharge 244, par un clapet non-retour de décharge 246. Les deux soupapes 240, 241 sont sollicitées vers leurs sièges par des ressorts 248, 249 respectifs. Les conduits reliant les clapets 242 à la soupape 240 débouchent dans une chambre 243 renfermant le ressort 248. Les conduits reliant les clapets 246 à la soupape 244 débouchent dans une chambre 245 renfermant le ressort 249. De l'autre côté du siège des soupapes 240, par rapport au ressort, se trouve définie une chambre annulaire 250 traversée par la tige de soupape 252 liée à un piston 258 se déplaçant dans un alésage 262. De même, de l'autre côté du siège de soupape 244, par rapport au ressort correspondant, se trouve définie une chambre annulaire 254 traversée par la tige de soupape 256 liée à un piston 260 se déplaçant dans un alésage 264. Les deux chambres 250 et 254 sont en communication directe avec un réservoir de gaz sous pression 255, ici de l'azote porté à 120 bars. Les ressorts 248, 249 ont une force suffisante pour vaincre la force développée sur les soupapes par le gaz sous pression et pour maintenir lesdites soupapes fermées lorsque le système n'est pas sollicité. Dans ces conditions, la quantité de gaz emprisonnée dans le ou chaque accumulateur élastique, reste constante. Les deux pistons 258, 260 sont actionnés par un fluide hydraulique sous pression admis dans des chambres respectives des alésages 262, 264, pour provoquer l'ouverture des soupapes correspondantes. Les deux alésages 262, 264 sont donc respectivement reliés à deux gorges 265, 266 d'un distributeur 263 à tiroir 267. Les deux gorges 265, 266 sont obturées de façon variable par des portées de commande 268, 269, respectives du tiroir, délimitant une chambre haute pression 270 reliée à une source hydraulique de haute pression et située entre les deux gorges 265, 266. Des chambres de décharge 272, 274, reliées à une bâche hydraulique, sont respectivement définies entre les portées de commande 268, 269 du tiroir et des portées d'extrémité 276, 278, respectivement, de ce même tiroir. Ce dernier est maintenu en position de repos par des ressorts antagonistes 279, 280. La portée d'extrémité 278 évolue dans une chambre 282 reliée à un émetteur hydraulique couplé à la pédale d'accélérateur, non représenté. Cette chambre reçoit donc une pression de commande déterminée par l'utilisateur. La portée d'extrémité 276 est prolongée par un piston 283 de plus faible section, recevant à son extrémité la pression qui règne dans la chambre 245 (conduit 284) entre les clapets et la soupape. Cette pression est donc représentative de la pression minimum qui règne dans les accumulateurs élastiques associés aux pompes, c'est-à-dire la pression lorsque le piston de la pompe est à son point mort d'aspiration. Le fonctionnement est le suivant.

L'alimentation des chambres 26 des accumulateurs élastiques est commandée par le tiroir 263 qui pilote les deux soupapes 240, 244. L'huile de commande admise dans la chambre 270 est prélevée en amont du moteur hydraulique 14. Le tiroir 267 se déplace selon les valeurs des pressions appliquées d'une part, dans la chambre 282 sous l'action de l'opérateur et, d'autre part, sur l'extrémité du piston 283. Lorsque l'opérateur veut augmenter la puissance, il actionne l'accélérateur et la pression d'huile dans la chambre 282 devient prédominante. Le tiroir se déplace dans un sens commandant l'ouverture de la soupape 240 et la fermeture de la soupape 244. Les clapets non-retour de charge 242 s'ouvrent, ce qui permet de charger les accumulateurs élastiques à partir d'un point donné du cycle des pompes correspondantes, jusqu'à ce qu'un nouvel équilibre soit atteint. A partir de ce moment, la soupape 240 reste fermée. Les accumulateurs élastiques 24 sont alors chargés à une nouvelle pression. Si l'opérateur veut réduire la puissance, il commande une baisse de pression dans la chambre 282, qui se traduit par un déplacement du tiroir 267 dans l'autre sens. La soupape 244 s'ouvre et la soupape 220 se ferme. Les clapets de non-retour de décharge 246 s'ouvrent à partir d'un point donné des cycles des pompes correspondantes, pour décharger les accumulateurs élastiques jusqu'à ce qu'un nouvel équilibre s'établisse. La régulation est très rapide car il suffit de cinq cycles environ pour charger ou décharger complètement les accumulateurs élastiques. Ceci ne représente qu'un délai de 0,15 seconde environ. Comme le délai de régulation du "cran" de combustible, décrit en référence à la figure 11, est du même ordre de grandeur, on peut envisager une prise de couple maximum en un délai de 0,3 seconde.

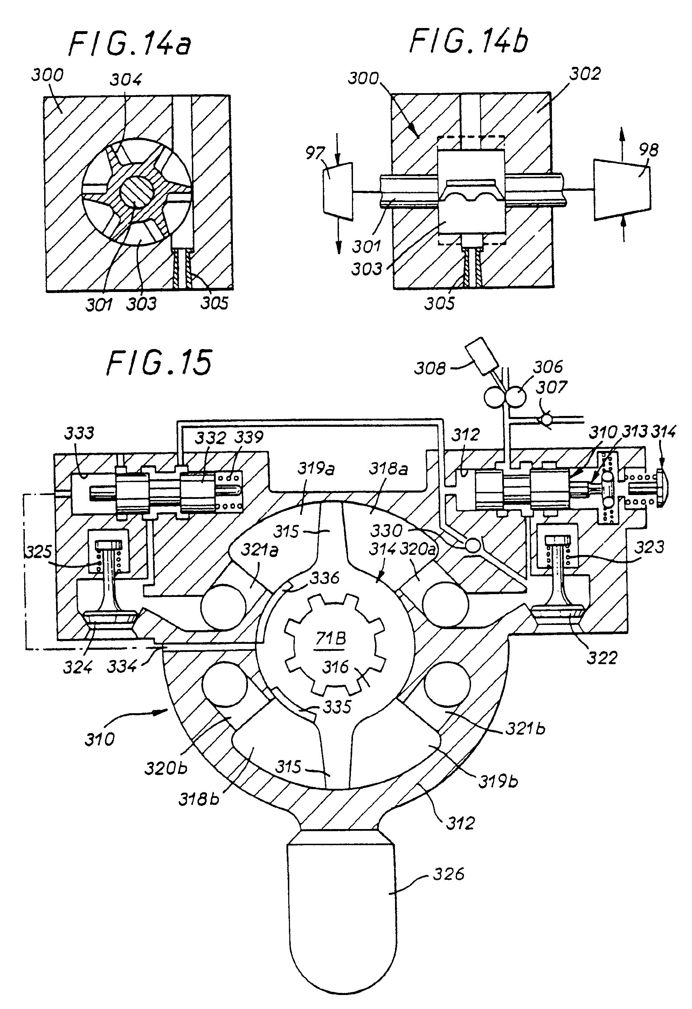

Comme il ressort de la description ci-dessus en référence à la figure 7, le moteur de démarrage 108, à mouvement alternatif, permet d'une part, d'actionner les pistons du moteur à combustion interne au démarrage et d'autre part, d'entraîner la pompe de balayage 96, à mouvement alternatif, spécialement utile au démarrage et au ralenti. Les perfectionnements représentés aux figures 14 et 15 permettent de supprimer la pompe de balayage (en confiant ce rôle en totalité au compresseur 98) ainsi que le moteur de démarrage 108. Dans ce but, une turbine hydraulique 300 (figures 14a, 14b) est directement couplée à l'arbre 301 qui entraîne le compresseur 98, c'est-à-dire plus précisément l'arbre reliant la turbine 97 et ledit compresseur. Cet arbre 301 est monté dans un alésage d'un bâti ou support 302 à l'intérieur duquel est définie une cavité 303 abritant le rotor 304 de la turbine, lequel est monté et fixé sur l'arbre 301. Une buse 305 débouchant dans ladite cavité est orientée vers les pales de ce rotor. La buse 305 est alimentée en fluide hydraulique par une pompe 306 (voir figure 15), par exemple du type pompe à engrenage, via un clapet de non-retour 307. La pompe est entraînée en rotation par un moteur électrique 308, classique, c'est-à-dire à rotation continue et non pas à mouvement alternatif, comme précédemment. Ainsi se trouve résolu le problème de l'alimentation en air de la chambre de balayage 94, à n'importe quelle vitesse, aussi bien qu'au démarrage, par l'entraînement du seul compresseur 98.

Le démarrage est aussi assuré à partir de la même pompe 306 entraînée par le moteur électrique, grâce à un démarreur hydraulique représenté sur la figure 15. Ce dispositif est couplé à l'un des arbres 71A, 71B visibles sur la figure 7. Il permet, à partir de l'énergie de la pompe 306, d'obtenir un mouvement rotatif oscillant susceptible de lancer le moteur à combustion interne. Ce démarreur 310 comprend un boîtier 312 dans lequel est engagée une extrémité de l'arbre rotatif oscillant 71B (par exemple) du mécanisme inverseur visible sur les figures 6 et 7.

Le boîtier 312 définit une cavité munie de parois cylindriques et de parois radiales, à l'intérieur de laquelle évolue un rotor 314 à deux palettes opposées 315. Ce rotor est monté sur l'arbre 71B et solidaire en rotation de celui-ci, par des cannelures. Ledit rotor 314 comporte un moyeu cylindrique 316 coaxial à l'arbre 71B et monté en rotation de façon étanche entre deux portées cylindriques de petit diamètre de ladite cavité. Ledit rotor 314 est par ailleurs en contact, par les extrémités opposées de ses palettes, avec des portées cylindriques de grand diamètre de la même cavité, de sorte qu'elles partagent cette cavité en quatre chambres 318a, 318b et 319a, 319b symétriques deux à deux par rapport à l'axe de rotation de l'arbre 71B. Des conduits 320a, 320b interconnectés entre eux (par une liaison non visible sur le dessin) débouchent respectivement dans les deux chambres 318a, 318b sur des parois radiales de la cavité. Les deux chambres 318a, 318b sont donc en communication permanente. De même, des conduits 321a, 321b interconnectés entre eux, débouchent respectivement dans les deux chambres 319a, 319b sur d'autres parois radiales de la même cavité. Les deux chambres 319a, 319b sont donc en communication permanente. Le débattement angulaire de la double palette à l'intérieur de la cavité est de 90°. Les deux chambres 318a, 318b communiquent avec une soupape de décharge 322 sollicitée à l'ouverture par un ressort 323. Lorsque cette soupape est ouverte, elle établit une communication avec une bâche hydraulique. De même, les deux chambres 319a, 319b communiquent avec une deuxième soupape de décharge 324, analogue, sollicitée à l'ouverture par un ressort 325. Les deux chambres 318a, 318b sont en outre reliées à la pompe 306 via un premier tiroir 310 évoluant dans un alésage 312. Ce tiroir est prévu pour prendre deux positions prédéterminées (établissant ou interrompant la communication entre ladite pompe et les chambres 318) grâce à un agencement de deux rainures à billes 313. L'une des extrémités de ce tiroir est placée en regard d'un organe d'actionnement 314 tel qu'un bouton-poussoir ou analogue. Une action sur ce dernier entraîne un déplacement du tiroir dans un sens tendant à établir la communication entre la pompe 306 et les deux chambres 318a, 318b. Les deux autres chambres 319a, 319b sont reliées (via les conduits 321a, 321b) à un accumulateur hydraulique 326 fixé au boîtier. La liaison entre lesdits conduits et ledit accumulateur n'est pas visible sur les dessins.

De plus, les chambres 319a, 319b sont aussi reliées à la "sortie" dudit premier tiroir par un circuit hydraulique comportant un clapet de non-retour 330, ici taré à 20 bars environ, et un second tiroir 332 se déplaçant à l'intérieur d'un alésage 333. Ce second tiroir est sollicité à la "fermeture" par un ressort 334 prenant appui à l'une de ses extrémités. L'autre extrémité du tiroir 332 évolue dans une partie de l'alésage 333 en communication avec un conduit 334. Ce dernier est susceptible d'être mis en communication avec l'une ou l'autre des paires de chambres 318, 319, via des rainures 335, 336 respectives, pratiquées dans le moyeu 316 du rotor 314. Par ailleurs, l'extrémité du tiroir 310 qui est opposée à celle qui coopère avec l'organe d'actionnement 314, évolue dans une partie de l'alésage 312 en communication avec la sortie du clapet de non-retour 330.

Le fonctionnement est le suivant. La pompe 306 est entraînée par son moteur électrique et envoie de l'huile sous pression au tiroir 310. Lorsqu'on pousse l'organe d'actionnement 314, on déplace le tiroir 310 et l'huile sous pression, en s'écoulant autour de la soupape 322, la repousse contre son siège. L'huile pénètre alors dans les deux chambres 318, ce qui entraîne la rotation du rotor et de l'arbre 71B jusqu'à ce que la rainure 336, ayant fait approximativement un quart de tour, pénètre dans la chambre 318b. L'huile sous pression repousse alors le tiroir 332 en position d'ouverture. A partir de ce moment, l'huile passe au travers du clapet de non-retour 330, traverse le tiroir 332 et referme la soupape 323. La pression s'établit dans les chambres 319 et comprime l'accumulateur 326. Pendant la compression de l'accumulateur, la pression dans les chambres 319 reste toujours inférieure à celle qui règne dans les chambres 318 du fait du tarage du clapet de non retour 330. Le rotor 314 reste donc en place jusqu'à ce que la pression augmentant dans l'alésage 312, repousse le tiroir 310 provoquant l'ouverture de la soupape 322. Celle-ci dégage alors une grande section de fuite qui décharge les chambres 318 sans résistance d'écoulement. Le rotor 314 tourne donc dans le sens inverse sous l'effet de l'accumulateur 326. Le moteur démarre. La rainure 335 établit alors la communication avec le conduit 334, ce qui permet au tiroir 332 de revenir à sa position d'origine, sous l'effet du ressort 339. Tous les éléments sont donc dans leur position du début du cycle de démarrage. En cas de mauvais démarrage du moteur à combustion interne, on peut donc à nouveau appuyer sur l'organe d'actionnement 314 et provoquer un nouveau cycle de lancement.

## Revendications

1. Groupe motopropulseur, notamment pour véhicule automobile, comprenant un moteur à combustion interne (60), mécaniquement couplé à un dispositif de transmission hydrostatique (11), comprenant au moins une pompe (12) à piston (13) entraînée par ledit moteur à combustion interne et un moteur volumétrique (14) connecté pour être alimenté par ladite pompe, caractérisé en ce que ladite chambre de compression de la pompe dans laquelle évolue ledit piston renferme ou est en communication permanente avec un accumulateur élastique (20), et en ce que ce dernier comporte ou est associé à des moyens de réglage de son élasticité.

2. Groupe motopropulseur selon la revendication 1, caractérisé en ce que ledit moteur à combustion interne (60) est un moteur à deux temps, à balayage.

3. Groupe motopropulseur selon la revendication 1 ou 2, caractérisé en ce que ledit moteur à combustion interne est équipé d'au moins un ensemble (65) cylindrique et piston moteur à course libre, définissant une chambre de combustion (61).

4. Groupe motopropulseur selon la revendication 3, caractérisé en ce qu'il comprend au moins deux tels ensembles (65a, 65b) cylindre et piston à course libre et en ce que les deux pistons (62a, 62b) sont accouplés d'une part à un mécanisme inverseur (67A) et d'autre part à des pompes (12a, 12b) respectives précitées.

5. Groupe motopropulseur selon la revendication 4, caractérisé en ce que ce mécanisme inverseur comporte un levier inverseur (70) monté pivotant en son milieu autour d'un arbre (71) perpendiculaire aux deux pistons à course libre, ledit levier comportant ainsi deux branches (74) égales, de part et d'autre de son point de pivotement médian et en ce que lesdits pistons à course libre (62) sont respectivement reliés de façon articulée aux extrémités desdites branches (74).

6. Groupe motopropulseur selon la revendication 5, caractérisé en ce que le piston (13) de chaque pompe est mécaniquement couplé à une branche (74) correspondante dudit levier inverseur, par l'intermédiaire d'une biellette (78) ou analogue, articulée en un point intermédiaire (79) de cette branche de levier, ledit point intermédiaire étant choisi en fonction des plages de vitesse dudit moteur à combustion interne et dudit dispositif de transmission hydrostatique.

7. Groupe motopropulseur selon l'une des revendications 4 à 6, caractérisé en ce qu'il comporte quatre ensembles (65a, 65d) cylindre et piston à course libre disposés en barrillet et accouplés par paires à deux mécanismes inverseurs (67A, 67B) précités respectifs et des moyens d'équilibrage et de synchronisation (80, 82) pour maintenir le fonctionnement des deux paires d'ensembles en opposition de phase.

8. Groupe motopropulseur selon la revendication 7, caractérisé en ce que lesdits moyens d'équilibrage et de synchronisation comportent un mécanisme de pignons satellites (80A, 80B) et planétaire (82), chaque arbre de pivotement (71A, 71B) d'un levier inverseur, solidaire de ce dernier, étant lié à un pignon satellite engrenant avec un pignon planétaire pivotant autour de l'axe de symétrie de l'agencement en barillet desdits ensembles cylindre et piston à course libre.

9. Groupe motopropulseur selon la revendication 8, caractérisé en ce que ledit pignon planétaire (82) est solidaire d'un arbre rotatif (83) et que cet arbre est un arbre à cames commandant les cycles de fonctionnement desdites chambres de combustion.

10. Groupe motopropulseur selon l'une des revendications 4 à 9, caractérisé en ce qu'il comporte un réservoir d'air de balayage (94), alimentant lesdites chambres de combustion par des lumières (93) pratiquées dans lesdits cylindres.

11. Groupe motopropulseur selon l'une des revendications 4 à 9, caractérisé en ce que ledit réservoir (94) est connecté à une pompe à air de balayage, oscillante, entraînée par l'arbre (71A) d'un levier inverseur précité.

12. Groupe motopropulseur selon la revendication 10 ou 11, caractérisé en ce que chaque lumière (93) comporte un orifice interne à bords longitudinaux rectilignes s'étendant suivant des génératrices de la chambre de combustion et un orifice à bords longitudinaux faisant un angle avec de telles génératrices.

13. Groupe motopropulseur selon l'une des revendications 3 à 12, caractérisé en ce qu'un démarreur électrique à mouvement alternatif oscillant est couplé à l'arbre d'un levier inverseur précité, de préférence un démarreur du type à réluctance variable et susceptible d'être commuté pour fonctionner en générateur.

14. Groupe motopropulseur selon la revendication 9, caractérisé en ce qu'il comprend un régulateur (87) interconnecté entre ledit arbre à cames (83) et des moyens de réglage de la quantité de combustible fournie au moteur, ces moyens de réglage comportant un mécanisme (159, 160) pour élaborer une pression de commande desdits moyens de réglage représentative des accélérations et décélérations du ou des pistons dudit moteur à combustion interne.

15. Groupe motopropulseur selon l'une des revendications précédentes, caractérisé en ce que ledit accumulateur élastique comporte ou est couplé à une première paroi mobile (22) appartenant à ladite chambre de compression de la pompe.

16. Groupe motopropulseur selon la revendication 15, caractérisé en ce que ledit accumulateur élastique comporte une chambre (26) remplie d'un gaz.

17. Groupe motopropulseur selon l'une des revendications précédentes, caractérisé en ce que ledit accumulateur élastique comporte un bloc de matériau élastomère (26b).

18. Groupe motopropulseur selon la revendication 15, caractérisé en ce que ledit accumulateur élastique comporte un piston (22c) formant ladite première paroi mobile, en ce que ce piston est en matériau ferromagnétique et en ce qu'il se déplace en regard d'une armature magnétique fixe (54), par exemple un électro-aimant.

19. Groupe motopropulseur selon l'une des revendications précédentes, caractérisé en ce que lesdits moyens de réglage de l'élasticité comportent une chambre à volume variable (42) remplie d'un fluide incompressible, séparée d'une partie déformable dudit accumulateur élastique par une seconde paroi mobile (32) et des moyens de commande (44) pour ajuster la quantité de fluide incompressible dans ladite chambre à volume variable.

20. Groupe motopropulseur selon la revendication 19, caractérisé en ce que ladite première paroi mobile (22a) ou ladite seconde paroi mobile (32a) ou chacune d'elles est une membrane déformable.

21. Groupe motopropulseur selon la revendication 19, caractérisé en ce que ladite première paroi mobile (22) ou ladite seconde paroi mobile (32) ou chacune d'elles est un piston libre monté dans un alésage correspondant.

22. Groupe motopropulseur selon l'une des revendications 19 à 21, caractérisé en ce que ladite chambre à volume variable (42) est agencée entre ladite partie déformable dudit accumulateur élastique et ladite chambre de compression (16) de la pompe.

23. Groupe motopropulseur selon l'une des revendications 19 à 21, caractérisé en ce que ladite partie déformable dudit accumulateur élastique est agencée entre ladite chambre de compression (16) de la pompe et ladite chambre à volume variable (42).

24. Groupe motopropulseur selon la revendication 16, caractérisé en ce que la chambre (26) remplie de gaz du ou chaque accumulateur élastique est reliée à un réservoir de gaz sous pression (255) via une soupape de charge (240), commandée, et un clapet non-retour de charge (242), d'une part, et une soupape de décharge (244), commandée et un clapet non-retour de décharge (246), d'autre part.

25. Groupe motopropulseur selon la revendication 24, caractérisé en ce que les deux soupapes de charge et de décharge (240, 242) précitées sont sollicitées en position de fermeture par des ressorts ou moyens analogues respectifs et sont hydrauliquement couplés à un tiroir de commande (263) soumis, dans son alésage, à des forces antagonistes, notamment représentatives de la commande de l'opérateur et de la pression minimum régnant dans au moins une chambre (26) remplie de gaz d'un accumulateur élastique précité.

26. Groupe motopropulseur selon l'une des revendications 4 à 12 ou la revendication 14, caractérisé en ce qu'il comprend un démarreur à actionnement hydraulique, à mouvement rotatif alternatif, couplé à un mécanisme inverseur (67, 71) précité.

27. Groupe motopropulseur selon la revendication 26, caractérisé en ce que ledit démarreur comporte une cavité dans laquelle est engagée un arbre rotatif oscillant (71B) dudit mécanisme inverseur, abritant un rotor à deux palettes (314) monté sur cet arbre, en ce que ledit rotor définit quatre chambres (318a, 318b, 319a, 319b) avec les parois de ladite cavité, les chambres opposées par rapport à l'axe de rotation dudit arbre étant en communication et en ce que deux telles chambres en communication sont reliées à une première soupape de décharge (322) et à une pompe d'alimentation de fluide hydraulique, via un premier tiroir (310) tandis que les deux autres chambres en communication sont reliées à une seconde soupape de décharge (324) et à un accumulateur (326).

28. Groupe motopropulseur selon la revendication 27, caractérisé en ce que lesdites deux autres chambres (319) sont reliées audit premier tiroir par un circuit hydraulique comportant un clapet anti-retour (330) taré et un second tiroir (332).

29. Groupe motopropulseur selon la revendication 28, caractérisé en ce que ledit premier tiroir (310) a l'une de ses extrémités placée en regard d'un organe d'actionnement (314) et son autre extrémité située dans un alésage en communication avec la sortie dudit clapet de non-retour (330) tandis que ledit second tiroir (332) est sollicité à la fermeture par un ressort (339) prenant appui sur l'une de ses extrémités, et que l'autre extrémité dudit second tiroir évolue dans un alésage relié à un conduit (334) susceptible d'être mis en communication avec l'une ou l'autre des paires de chambres précitées, via des rainures (335, 336) pratiquées dans un moyeu cylindrique dudit rotor à deux palettes.

30. Groupe motopropulseur selon l'une des revendications 2 à 10, caractérisé en ce qu'il comporte un réservoir d'air de balayage (94) alimenté par un compresseur lui-même entraîné par une turbine hydraulique (300) alimentée par une pompe (306).

31. Véhicule automobile, caractérisé en ce qu'il comporte un groupe motopropulseur selon l'une des revendications 1 à 30.

32. Véhicule automobile selon la revendication 31, caractérisé en ce que le groupe motopropulseur est pourvu de deux moteurs volumétriques (14a, 14b) couplés respectivement aux roues avant et aux roues arrière, chaque moteur étant alimenté par deux pompes (12) dudit dispositif de transmission hydrostatique, fonctionnant en opposition de phase.

33. Véhicule automobile selon la revendication 31, caractérisé en ce que le groupe motopropulseur est pourvu de quatre moteurs volumétriques (114) respectivement intégrés à des roues motrices.

**Patentansprüche**

1. Antriebsanlage, insbesondere für ein Kraftfahrzeug, mit einem Verbrennungsmotor (60), der mechanisch mit einer hydrostatischen Kraftübertragungseinrichtung (11) gekoppelt ist, mit zumindest einer durch den Verbrennungsmotor angetriebenen Kolbenpumpe (12, 13) und einem volumetrischen Motor (14), der durch die Pumpe versorgt wird, dadurch gekennzeichnet, daß die Druckkammer der Pumpe, in der sich der Kolben hin- und herbewegt, einen elastischen Speicher (20) oder Federspeicher enthält oder ständig mit diesem verbunden ist, und daß dieser Speicher Mittel zur Regelung seiner Elastizität umfaßt oder mit diesen verbunden ist.

2. Antriebsanlage nach Anspruch 1, dadurch gekennzeichnet, daß der Verbrennungsmotor (60) ein Zweitakt-Spülmotor ist.

3. Antriebsanlage nach Anspruch 1, dadurch gekennzeichnet, daß der Verbrennungsmotor mit zumindest einer Zylinder-Arbeitskolben-Einheit (65) mit Freilauf ausgestattet ist, die eine Verbrennungskammer (61) definiert.

4. Antriebsanlage nach Anspruch 3, dadurch gekennzeichnet, daß sie zumindest zwei solche Zylinder-Kolben-Einheiten (65a, 65b) mit Freilauf umfaßt, und daß die beiden Kolben (62a, 62b) einerseits mit einem Umkehrmechanismus (67A) und andererseits mit den jeweiligen Pumpen (12a, 12b) gekoppelt sind.

5. Antriebsanlage nach Anspruch 4, dadurch gekennzeichnet, daß der Umkehrmechanismus einen Umkehrhebel (70) aufweist, der in seiner Mitte um eine Welle (71) verschwenkbar angeordnet ist, die senkrecht auf zwei Kolben mit freiem Lauf steht, wobei der Hebel somit zwei gleiche Arme (74) auf beiden Seiten seines Mittelschwenkpunktes aufweist, und daß die Kolben mit freiem Lauf (62) jeweils gelenkig mit den Enden der Arme (74) verbunden sind.

6. Antriebsanlage nach Anspruch 5, dadurch gekennzeichnet, daß der Kolben (13) einer jeden Pumpe mechanisch mit einem jeweiligen Arm (74) eines Umkehr- oder Kipphebels mittels eines Schwingarmes (78) oder dergl. gekoppelt ist, der an einer Zwischenstelle (79) dieses Hebelarmes gelenkig angebracht ist, wobei die Zwischenstelle in Abhängigkeit vom Geschwindigkeitsbereich des Verbrennungsmotors und der hydrostatitschen Kraftübertragungseinrichtung gewählt ist.

7. Antriebsanlage nach einem der Ansprüche 4 bis 6, dadurch gekennzeichnet, daß sie vier Zylinder-Kolben-Einheiten (65a, 65d) mit Freilauf umfaßt, die tonnenförmig angeordnet sind und paarweise mit den beiden jeweiligen Umkehrmechanismen (67A, 67B) und Ausgleichs- und Synchronisationsmitteln (80, 82) gekoppelt sind, um eine gegenphasige Funktion der beiden Paare von Einheiten aufrechtzuerhalten.

8. Antriebsanlage nach Anspruch 7, dadurch gekennzeichnet, daß die Ausgleichs- und Synchronisationsmittel einen Planetenräder (80A, 80B)/Zentralrad(82)-Mechanismus umfassen, wobei jede Schwenkachse (71A, 71B) eines mit dieser fest verbundenen Umkehr- bzw. Kipphebels mit einem Planetenrad verbunden ist, das mit einem Zentralrad kämmt, welches sich um die Symmetrieachse der tonnenförmigen Anordnung der Zylinder-Kolben-Einheiten mit Freilauf dreht.

9. Antriebsanlage nach Anspruch 8, dadurch gekennzeichnet, daß das Zentralrad (82) fest mit einer Drehwelle (83) verbunden ist und daß diese Welle eine Nockenwelle ist, die die Funktionszyklen der Verbrennungskammern steuert.

10. Antriebsanlage nach einem der Ansprüche 4 bis 9, dadurch gekennzeichnet, daß sie einen Spülluftspeicher (94) umfaßt, der die Druckkammern über in den Zylindern ausgebildete Öffnungen (93) versorgt.

11. Antriebsanlage nach einem der Ansprüche 4 bis 9, dadurch gekennzeichnet, daß der Speicher (94) mit einer oszillierenden Spülluftpumpe verbunden ist, die durch die Welle (71A) des Umkehr- bzw. Kipphebels angetrieben ist.

12. Antriebsanlage nach Anspruch 10 oder 11, dadurch gekennzeichnet, daß jede Öffnung (93) eine innere Öffnung mit geradlinigen Längsrändern umfaßt, die sich entlang der Mantellinie der Verbrennungskammer erstrecken, sowie eine Öffnung mit Längsrändern, die einen Winkel mit diesen Mantellinien bilden.

13. Antriebsanlage nach einem der Ansprüche 3 bis 12, dadurch gekennzeichnet, daß ein abwechselnd hin- und herbewegbarer elektrischer Anlasser mit der Welle des Umkehr- bzw. Kipphebels gekoppelt ist, vorzugsweise ein solcher Anlasser, der eine variable Reluktanz aufweist und geeignet ist, für eine Funktion als Generator umgeschaltet zu werden.

14. Antriebsanlage nach Anspruch 9, dadurch gekennzeichnet, daß sie einen Regler (87) umfaßt, der zwischen die Nockenwelle (83) und Mittel zur Regelung der Menge des dem Motor gelieferten Treibstoffes geschaltet ist, wobei diese Regelungsmittel einen Mechanismus (159, 160) umfassen, um einen Steuerdruck der Regelungsmittel zu erzeugen, der repräsentativ für Beschleunigungen und Verzögerungen des oder der Kolben des Verbrennungsmotors ist.

15. Antriebsanlage nach einem der vorhergehenden Ansprüche, dadurch gekennzeichnet, daß der elastische Speicher eine erste bewegliche Wand (22) umfaßt oder mit dieser verbunden ist, die der Druckkammer der Pumpe zugeordnet ist.

16. Antriebsanlage nach Anspruch 15, dadurch gekennzeichnet, daß der elastische Speicher eine mit einem Gas gefüllte Kammer (26) umfaßt.

17. Antriebsanlage nach einem der vorhergehenden Ansprüche, dadurch gekennzeichnet, daß der elastische Speicher einen Block (26b) aus Elastomermaterial umfaßt.

18. Antriebsanlage nach Anspruch 15, dadurch gekennzeichnet, daß der elastische Speicher einen Kolben (22c) umfaßt, der die erste bewegliche Wand bildet, daß dieser Kolben aus ferromagnetischem Material besteht, und daß dieser sich bezüglich einer festen Magnetarmierung (54), wie z.B. einem Elektromagneten, bewegt.

19. Antriebsanlage nach einem der vorhergehenden Ansprüche, dadurch gekennzeichnet, daß die Mittel zur Regelung der Elastizität eine Kammer (42) mit variablem Volumen umfaßt, die mit einem nicht komprimierbaren Fluid gefüllt ist und durch eine zweite bewegliche Wand (32) von einem deformierbaren Teil des elastischen Speichers getrennt ist, und Steuermittel (44) zum Einstellen der Menge des nicht komprimierbaren Fluids in der Kammer mit variablem Volumen.

20. Antriebsanlage nach Anspruch 19, dadurch gekennzeichnet, daß die erste bewegliche Wand (22a) oder die zweite bewegliche Wand (32a) oder jede dieser Wände durch eine deformierbare Membran gebildet sind.

21. Antriebsanlage nach Anspruch 19, dadurch gekennzeichnet, daß die erste bewegliche Wand (22) oder die zweite bewegliche Wand (32) oder jede dieser Wände durch einen freifliegenden Kolben gebildet sind, der in einer entsprechenden Bohrung angeordnet ist.

22. Antriebsanlage nach einem der Ansprüche 19 bis 21, dadurch gekennzeichnet, daß die Kammer (42) mit variablem Volumen zwischen dem deformierbaren Teil des elastischen Speichers und der Druckkammer (16) der Pumpe angeordnet ist.

23. Antriebsanlage nach einem der Ansprüche 19 bis 21, dadurch gekennzeichnet, daß der deformierbare Abschnitt des elastischen Speichers zwischen der Druckkammer (16) der Pumpe und der Kammer mit variablem Volumen (42) angeordnet ist.

24. Antriebsanlage nach Anspruch 16, dadurch gekennzeichnet, daß die mit Gas gefüllte Kammer (26) des oder eines jeden elastischen Speichers mit einem unter Druck stehenden Gasspeicher (255) verbunden ist, und zwar einerseits über ein gesteuertes Einlaßventil (240) und ein Einlaß-Rückschlagventil (242), und andererseits über ein gesteuertes Auslaßventil (244) und ein Auslaß-Rückschlagventil (246).

25. Antriebsanlage nach Anspruch 24, dadurch gekennzeichnet, daß die beiden Einlaß- und Auslaßventile (240, 242) in Schließstellung mittels Federn oder dergl. belastet und hydraulisch mit einem Steuerschieber (263) gekoppelt sind, der in seiner Bohrung entgegengesetzten Kräften ausgesetzt ist, die insbesondere repräsentativ für den Steuerbefehl der Bedienungsperson und den minimalen Druck sind, der in zumindest einer mit Gas gefüllten Kammer (26) des elastischen Speichers herrscht.

26. Antriebsanlage nach einem der Ansprüche 4 bis 12 oder nach Anspruch 14, dadurch gekennzeichnet, daß sie einen hydraulisch betätigten, abwechselnd drehbewegbaren Anlasser umfaßt, der mit dem Umkehrmechanismus (67, 71) gekoppelt ist.

27. Antriebsanlage nach Anspruch 26, dadurch gekennzeichnet, daß der Anlasser eine Ausnehmung umfaßt, in der eine oszillierende Drehwelle (71B) des Umkehrmechanismus aufgenommen ist, wobei ein auf dieser Welle angebrachter Rotor (314) mit zwei Schaufeln untergebracht ist, daß der Rotor zusammen mit den Wänden der Ausnehmung vier Kammern (318a, 318b, 319a, 319b) definiert, wobei die bezüglich der Drehachse der Welle einander gegenüberliegenden Kammern miteinander in Verbindung stehen, und daß zwei solche in Verbindung stehende Kammern mit einem ersten Auslaßventil (322) und einer Pumpe zur Versorgung mit Hydraulikfluid über einen ersten Schieber (310) verbunden sind, während die anderen beiden in Verbindung stehenden Kammern mit einem zweiten Auslaßventil (324) und einem Speicher (326) verbunden sind.

28. Antriebsanlage nach Anspruch 27, dadurch gekennzeichnet, daß die beiden anderen Kammern (319) mit dem ersten Schieber über einen Hydraulikkreis verbunden sind, der ein geeichtes Rückschlagventil (330) und einen zweiten Schieber (332) umfaßt.

29. Antriebsanlage nach Anspruch 28, dadurch gekennzeichnet, daß der erste Schieber (310) mit einem seiner Enden gegenüber einem Betätigungselement (314) und mit seinem anderen Ende in einer Bohrung angeordnet ist, die mit dem Ausgang des Rückschlagventils (330) verbunden ist, während der zweite Schieber (332) in Schließrichtung durch eine Feder (339) belastet ist, die sich an einem seiner Enden abstützt, und daß das andere Ende des zweiten Schiebers sich in einer Bohrung hin- und herbewegt, die mit einer Leitung (334) verbunden ist, die mit dem einen oder dem anderen der Kammerpaare über Rillen (335, 336) verbindbar ist, die in einer zylindrischen Nabe des mit zwei Schaufeln versehenen Rotors ausgebildet sind.

30. Antriebsanlage nach einem der Ansprüche 2 bis 10, dadurch gekennzeichnet, daß sie einen Spülluftspeicher (94) umfaßt, der durch einen Kompressor versorgt ist, der selbst durch eine Wasserturbine (300) angetrieben ist, die über eine Pumpe (306) versorgt wird.

31. Kraftfahrzeug, dadurch gekennzeichnet, daß es eine Antriebsanlage gemäß einem der Ansprüche 1 bis 30 umfaßt.

32. Kraftfahrzeug nach Anspruch 31, dadurch gekennzeichnet, daß die Antriebsanlage mit zwei volumetrischen Motoren (14a, 14b) versehen ist, die jeweils mit den Vorderrädern und den Hinterrädern gekoppelt sind, wobei jeder Motor durch zwei Pumpen (12) der hydrostatischen Kraftübertragungseinrichtung versorgt ist und ein gegenphasiger Betrieb vorliegt.

33. Kraftfahrzeug nach Anspruch 31, dadurch gekennzeichnet, daß die Antriebsanlage mit vier volumetrischen Motoren (114) versehen ist, die jeweils in Antriebsrädern integriert sind.

## Claims

1. Power unit, notably for an automotive vehicle, comprising an internal combustion engine (60), mechanically coupled to a hydrostatic transmission device (11), comprising at least a piston (13) pump (12) driven by said internal combustion engine and a volumetric motor (14) connected so as to be supplied by said pump, characterized in that said pump compression chamber in which said piston moves contains or is in permanent connection with an elastic accumulator (20), and in that this latter contains or is associated with the means for regulating its elasticity.

2. Power unit according to claim 1, characterized in that said internal combustion engine (60) is a two-stroke scavenging engine.

3. Power unit according to claim 1 or 2, characterized in that said internal combustion engine is equipped with at least one cylinder arrangement (65) and a free-running engine piston, defining a combustion chamber (61).

4. Power unit according to claim 3, characterized in that it contains at least two such cylinder and free-running engine piston arrangements (65a, 65b) and in that the two pistons (62a, 62b) are linked on the one hand to an reverse-action mechanism (67A) and on the other hand to the respective aforementioned pumps (12a, 12b).

5. Power unit according to claim 4, characterized in that this reverse-action mechanism comprises a reverse-action lever (70) mounted pivoting at its midpoint around a shaft (71) perpendicular to the two free-running pistons, said lever thus comprising two equal arms (74) on either side of its median pivoting point and in that said free-running pistons (62) are respectively connected, in an articulated fashion, to the ends of said arms (74).

6. Power unit according to claim 5, characterized in that the piston (13) of each pump is mechanically coupled to a corresponding arm (74) of said reverse-action lever, by the intermediary of a connecting rod (78) or similar, articulated at 30 an intermediate point (79) on this arm of the lever, said intermediate point being chosen as a function of the speed range of said internal combustion engine and of said hydrostatic transmission device.

7. Power unit according to one of claims 4 to 6, characterized in that it contains four cylinder and free-running piston arrangements (65a, 65d) disposed in a barrel and linked in pairs respectively to the two aforementioned reverse-action mechanisms (67A, 67B) and the means of balancing and synchronization (80, 82) in order to maintain the functioning of the two pairs of arrangement in phase opposition.

8. Power unit according to claim 7, characterized in that said means of balancing and synchronization comprises a mechanism of transfer pinions (80A, 80B) and side gear (82), each rotating shaft (71A, 71B) of the reverse-action lever, integral with this latter, being linked to a transfer pinion engaging with a side gear rotating around the axis of symmetry of the barrel of said cylinder and free-running piston arrangements.

9. Power unit according to claim 8, characterized in that said side gear (82) is integral with a rotating shaft (83) and that this shaft is a camshaft which controls the operating cycles of said combustion chambers.

10. Power unit according to one of claims 4 to 9, characterized in that it contains a scavenging air reservoir (94), feeding said combustion chambers by ports (93) cut into said cylinders.

11. Power unit according to one of claims 4 to 9, characterized in that said reservoir (94) is connected to a swinging scavenging air pump, powered by the shaft (71A) of the aforementioned reverse-action lever.

12. Power unit according to claim 10 or 11, characterized in that each port (93) comprises an internal opening with rectilinear, longitudinal sides which spreads out following the generators of the combustion chamber and an opening with longitudinal edges creating an angle with said generators.

13. Power unit according to one of claims 3 to 12, characterized in that an electric starter motor with a swinging alternating movement is coupled to the shaft of the aforementioned reverse-action lever, preferably a variable reluctance type starter motor which is capable of being 35 switched over to function as a generator.

14. Power unit according to claim 9, characterized in that it contains a regulator (87) interconnected between said camshaft (83) and the means of regulating the quantity of fuel provided to the engine, these means of regulating containing a mechanism (159, 160) to calculate a control pressure of said means of regulating which is representative of the accelerations and decelerations of the piston(s) of said internal combustion engine.

15. Power unit according to one of the previous claims, characterized in that said elastic accumulator contains or is coupled to a first movable wall (22) which is part of said pump compression chamber.

16. Power unit according to claim 15, characterized in that said elastic accumulator contains a gas-filled chamber (26).

17. Power unit according to one of the previous claims, characterized in that said elastic accumulator contains a block of elastomeric material (26b).

18. Power unit according to claim 15, characterized in that said elastic accumulator contains a piston (22c) forming said first movable wall, and that this piston is of a ferromagnetic material and in that it moves in relation to a fixed magnetic armature (54), for example an electromagnet.

19. Power unit according to one of the previous claims, characterized in that the said means for regulating the elasticity contains a chamber of variable volume (42) filled with an incompressible liquid, separated from the deformable part of said elastic accumulator by a second movable wall (32) and the means of control (44) for adjusting the quantity of incompressible fluid in said variable volume chamber.

20. Power unit according to claim 19, characterized in that said first movable wall (22a) or said second movable wall (32a) or each of them is a deformable membrane.

21. Power unit according to claim 19, characterized in that said first movable wall (22) or said second movable wall (32) or each of them is a free-floating piston mounted in a corresponding cylinder bore.

22. Power unit according to one of claims 19 to 21, characterized in that said variable volume chamber (42) is arranged between said deformable part of said elastic accumulator and said pump compression chamber (16).

23. Power unit according to one of claims 19 to 21, characterized in that said deformable part of said elastic accumulator is arranged between said pump compression chamber (16) and said variable volume chamber (42).

24. Power unit according to claim 16, characterized in that the gas-filled chamber (26) of the or each elastic accumulator is linked to a pressurized gas reservoir (255) via a mechanically operated loading valve (240), and a non-return loading valve (242), on the one hand, and a mechanically operated delivery valve (244), and a non-return delivery valve (246), on the other.

25. Power unit according to claim 24, characterized in that the two aforementioned loading and delivery valves (240, 242) are held in the closed position respectively by springs or similar means and are hydraulically coupled to a control slide-valve (263) subjected, in its cylinder bore, to opposing forces, notably representative of the operator's control and of the minimum pressure prevailing in at least one gas-filled chamber (26) of the aforementioned elastic accumulator.

26. Power unit according to one of claims 4 to 12 or claim 14, characterized in that it contains a hydraulic action starter motor with an oscillatory rotational motion, coupled to the aforementioned reverse-action mechanism (67, 71).

27. Power unit according to claim 26, characterized in that said starter contains a cavity in which an oscillating rotating shaft (71B) of said reverse-action mechanism is engaged accommodating a two-vaned rotor (314) mounted on this shaft, in that said rotor defines four chambers (318a, 318b, 319a, 319b) with the walls of said cavity, the opposing chambers relative to the axis of rotation of said shaft being in communication and in that two such chambers in communication are connected to a first delivery valve (322) and to a hydraulic fluid feed pump, via a first-slide valve (310) whilst the two other chambers in communication are connected to a second delivery valve (324) and a battery (326).

28. Power unit according to claim 27, characterized in that said two other chambers (319) are connected to said first slide-valve by a hydraulic circuit containing a spring-loaded non-return valve (330) and a second slide-valve (332).

29. Power unit according to claim 28, characterized in that said first slide-valve (310) has one of its ends placed opposite a starting device (314) and its other end situated in a cylinder bore which is in communication with the outlet of said non-return valve (330) whilst the said second slide-valve (332) is held in the closed position by a spring (339) applying pressure on one of its ends, and that the other end of said second slide-valve moves in a cylinder bore connected to a conduit (334) which can be put in communication with one or other of the aforementioned pairs of chambers, via grooves (335, 336) cut in the cylindrical hub of said two-vaned rotor.

30. Power unit according to one of claims 2 to 10, characterized in that it contains an air scavenging reservoir (94) fed by a compressor which is itself powered by a water turbine (300) fed by a pump (306).

31. Automotive vehicle, characterized in that it contains an power unit according to claims 1 to 30.

32. Automotive vehicle according to claim 31, characterized in that the power unit is provided with two volumetric motors (14a, 14b) coupled respectively to the front wheels and the rear wheels, each motor being fed by two pumps (12) of said hydrostatic transmission device, operating in phase opposition.

33. Automotive vehicle according to claim 31, characterized in that the power unit is provided with four volumetric motors (114) integrated respectively with the driving wheels.

EP 0 407 436 B1

FIG.1

FIG.2

17

FIG.3

FIG.4

FIG.5

# FIG.6

# FIG.7

FIG.8

FIG.9

FIG.10

FIG.11

# FIG.12a

# FIG.12b

# FIG.12c

# FIG.13

EP 0 407 436 B1

FIG.14a

FIG.14b

FIG.15